# EUROPEAN PATENT SPECIFICATION

(11) **EP 0 867 578 B1**
(45) Date of publication and mention of the grant of the patent: **27.12.2000**
(21) Application number: 98200963.1
(22) Date of filing: 27.03.1998
(51) Int. Cl.: E04C 5/16, F16B 7/18

(54) **A method for connecting a connector to a concrete reinforcing bar and a connector to be connected to such bar**
Verfahren zum Verbinden von Verbindungselementen und Bewehrungsstäben und dgl. Verbindungselement
Procédé de raccordement d'un raccord à une barre d'armature et un tel raccord

(30) Priority: 27.03.1997 NL 1005655
(43) Date of publication of application: 30.09.1998
(73) Proprietor: Barfix Bermuda Ltd, Hamilton, Bermuda HM 11 (BM)
(72) Inventor: Van de Riet, Henk, Hamilton, Bermuda HM BX (BM); Minieri, Bob, Conroe, Texas 77302 (US)
(74) Representative: Louet Feisser, Arnold

(56) References cited:
- EP-A- 0 077 952
- EP-A- 0 552 424
- DE-A- 2 730 001
- DE-C- 3 122 874
- FR-A- 745 561
- FR-A- 746 793
- GB-A- 2 163 194
- NL-A- 8 301 358
- US-A- 3 501 995
- US-A- 3 850 535
- US-A- 4 599 021

## Description

The invention relates to a method for connecting a connector to the end of a concrete reinforcing bar, the bar being provided with ribs at its outside surface, whereby screw thread is produced substantially in said ribs on said end of said bar, and whereby the connector is screwed on said end, the connector comprising a substantially cylindrical hole provided with internal screw thread. By making use of such method, which is disclosed in GB-A-2163194, a sufficient connection is obtained with the screw thread being produced in said ribs and furthermore the tensile strength of the reinforcing bar is not affected at the location of the screw thread.

The interconnecting of the ends of reinforcing bars with a view to forming the reinforcement, prior to the pouring of concrete round said reinforcement, must take place in such a manner that relatively large pressure forces and/or tensile forces can be transferred. Furthermore it must be avoided that the strength of the reinforcing bars is decreased as a result of a reduction of the cross-sectional area.

Especially at the building site, where the ends of reinforcing bars must be interconnected or connected to other objects, it is desirable that such connection can take place in a quick, efficient and reliable manner, whereby it is advantageous when this can be done with a minimum amount of tools. In addition to this it is desirable that the cut-off or sawn-off end of the reinforcing bar can be brought into engagement with a connector without any pre-preparation of the bar being required. Furthermore it is undesirable for the connector to take up too much volume in the poured concrete, especially in a direction transversely to the reinforcing bar.

The object of the invention is to provide a method for interconnecting reinforcing bars and/or for attaching a reinforcing bar to an other object in a quick and reliable manner without pretreating the reinforcing bar.

In order to accomplish that objective said screw thread is produced on said end of said bar by a screw thread producing portion of said connector, which portion co-axially adjoins said internal screw thread and which portion is positioned between said internal screw thread and the entrance of said hole, whereby the screw thread is produced by a material removing cutting operation.

A connector with a screw thread producing portion to be connected to a tube is disclosed in FR-A-745561. However, the screw thread is produced in the cylindrical surface by a rolling operation whereby the material is deformed. Such operation does not produce a proper screw thread in the ribs of a reinforcing bar.

In this manner it is possible to screw the connector onto the end of a reinforcing bar in a very simple manner, whereby first screw thread is produced and subsequently the screw thread thus formed is brought into engagement with the internal screw thread of the connector.

Preferably the removed material is stored in recesses in the connector. Such recesses may extend in axial direction along the inner surface of the thread producing portion of the hole. Preferable six or more of such recesses are present.

The hole may be a blind hole but preferably the hole is a through hole, which is provided with co-axially extending thread producing portions near each end, whilst the part of said hole extending between said portions is provided with internal screw thread. A connector of this kind may first be screwed onto the end of a first reinforcing bar, after which the end of a second reinforcing bar is screwed into the connector.

Thus it is possible to form a simple, reliable and strong connection between two concrete reinforcing bars.

The hole in the connector preferably comprises two portions with internal screw thread at both sides of its middle portion, said middle portion having a smaller diameter then the largest diameter of the screw thread, so that it forms a stop for a reinforcing bar being screwed in the connector. Thereby the depth to which each bar can be screwed into the connector is limited.

The two thread producing portions may have different diameters, so that they are capable of producing different screw threads, and the adjoining, internally threaded portions of the hole may be provided with different threads at both sides of the middle portion of the hole. In an other embodiment the hole is partially provided with right-handed internal screw thread and partially provided with left-handed internal screw thread, wherein the thread producing portions produce corresponding screw threads. This makes it possible to interconnect two reinforcing bars by means of a single motion of the connector.

At least part of the connector may have an outer circumference in the shape of a hexagon, seen in cross-sectional view, so that the connector is externally formed to have substantially the shape of a regular hexagon, whose six faces have parallel intersecting lines. In that case the connector can be rotated by means of conventional tools.

In a preferred embodiment the connector is externally formed to have substantially the shape of a cylinder, which is co-axially oriented with respect to said hole. Such cylinder surface can be engaged by a special tool to be rotated. The surface of said cylinder may thereby be provided with friction-increasing means, such as an axially oriented rib profile. This makes it easier for the connector to engage when being rotated.

In another preferred embodiment the connector has a substantially cylindrical outside surface, at least part of that outside surface is provided with external screw thread, which extends co-axially with said internal screw thread. An other part of said outside surface may be provided with a hexagon, seen in cross-sectional view, which hexagon lies entirely within the smallest cylindrical surface formed by the external screw thread.

To interconnect two reinforcing bars such connector can be screwed on the end of one bar and another connector can be screwed on the end of the other bar, both connectors having external screw thread at its substantially cylindrical outside, after which a connecting part comprising an internally threaded through hole is first screwed onto the external screw thread of one connector and then screwed back partially, whereby said connecting part is also screwed onto the external screw thread of the other connector.

The connector may be provided with attaching means for connecting it to an other object other then a reinforcing bar.

In another preferred embodiment said connector is provided with a flange at an axially oriented end thereof, which flange may have a square configuration and which may comprise holes near the corner points. In that case said connector can be screwed onto the end of a reinforcing bar, after which the flange is placed in abutting relationship with the surface of the housing in which concrete is formed, whereby it may or may not be fixed to said surface, for example by driving nails through the holes. After the concrete has been poured and the housing has been removed, the flange is present on the surface of the poured concrete, so that an object which is to be firmly secured can be attached to the flange.

In one preferred embodiment the connector is provided with an axially oriented, internally threaded hole at the axially oriented end that faces away from the end where the entrance of the hole with the adjoining thread producing portion is provided. This makes it possible to attach an object to said connector by means of a bolt, whilst the other end of said connector is attached to the end of the reinforcing bar.

Preferably the connector is provided with a radially oriented bore, which connects the outside surface with the interior of said hole, through which opening it is possible to see or feel whether the bar extends into the hole as far as said bore. When the end of the reinforcing bar is screwed into the hole it is possible to verify, either visually or by inserting a pin or so into said opening, whether said end extends sufficiently far into the connector. Preferably said opening is a hole extending through the entire connector, so that it is possible to see through said hole whether an object is present in the connector at the location of said hole.

Preferably the entrance of said hole is configured to have the shape of a funnel which extends as far as the location where said tapering part adjoins said thread producing portion. This facilitates the insertion of the end of a reinforcing bar.

Preferably the connector is substantially made of steel, and said steel has been locally hardened, by induction hardening, for example, at the location of said thread producing portion.

The invention relates to the described method as well as to the connector to be used when applying the method.

Further aspects of the invention, which may be used both separately and in combination with each other, will be described below with reference to the Figures and be defined in the claims.

Hereafter a few embodiments of a connector according to the invention will be described by way of illustration, whereby reference will be made to the drawing.
Figure 1 shows a first embodiment of a connector;
Figure 2A is an end view of said first embodiment;
Figure 2B is an end view of a second embodiment;
Figure 3 is a longitudinal sectional view of said second embodiment;
Figure 4 shows a detail of said second embodiment;
Figures 5 and 6 shows the manner in which said connector is attached to the two ends of concrete reinforcing bars;
Figure 7 shows a third embodiment of a connector;
Figure 8 is a perspective view of the third embodiment;
Figure 9 shows another manner of connecting reinforcing bars;
Figure 10 shows a portion of Figure 9 in more detail;
Figure 11 is a perspective view of a connector as shown in Figures 9 an 10;
Figure 12 is a longitudinal sectional view of an other embodiment of a connector, and
Figures 13 and 14 show connectors comprising a flange.

The Figures are merely diagrammatic illustrations, wherein like parts in the various embodiments are numbered alike.

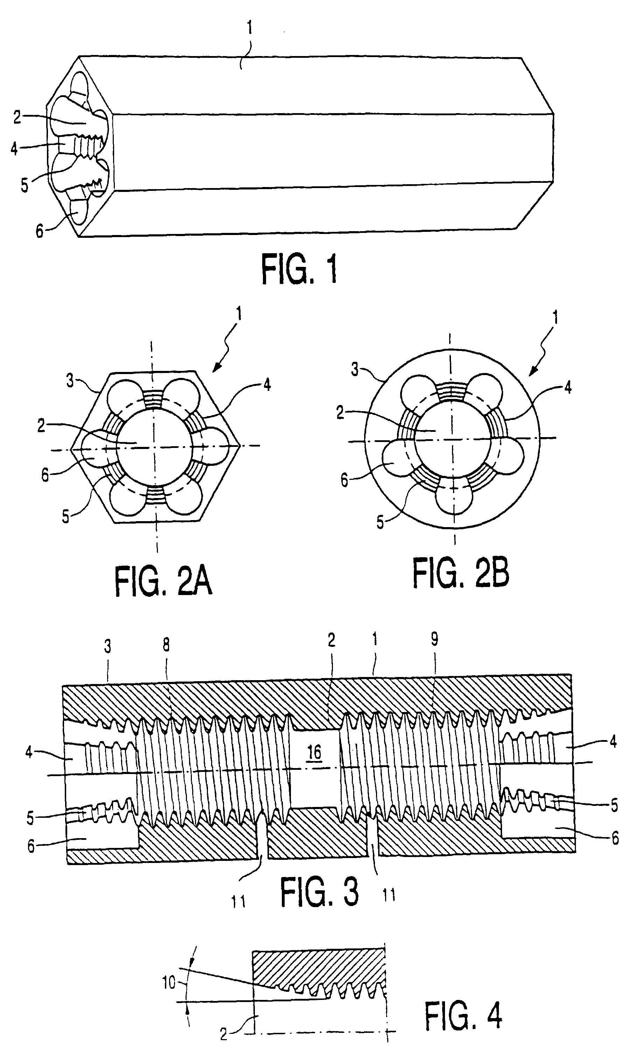

Figure 1 shows a first embodiment of a connector 1 having a hexagonal outside surface 3 (figure 2A) and a through hole 2. Near the entrance of said hole 2 a screw thread cutting portion 4 is provided, which comprises cutting parts 5 and six recesses 6.

Figure 2A is a side view of the connector according to Figure 1. Figure 2B is a similar side view of a second embodiment having a cylindrical outside surface and having five recesses 6.

Preferably six recesses 6 or more are present to increase the number of cutting parts 5. Furthermore the cutting parts 5 will be smaller so that the mechanical friction when cutting the screw thread is less.

Figure 3 is a longitudinal sectional view of the second embodiment of the connector 1. A through hole 2 is present in the connector 1, which hole 2 comprises internally threaded portions 8,9 on either side of the middle portion 16. The middle portion 16 forms a stop for the reinforcing bar when being screwed in the connector 1. The thread cutting portion 4 comprising cutting parts 5 and recesses 6 is provided in adjoining relationship to each of said internally threaded portions 8,9.

Figure 3 shows two bores 11 extending between the outside surface of the connector 1 and the hole 2. Through the bore 11 it is possible to feel with a pin whether or not the end of the reinforcing bar 14,15 is screwed far enough in the connector. In case bore 11 is a through bore, i.e. two co-axially bores, it is possible to look through said two bores in case the end of the bar 14,15 does not extend far enough into the connector, so to do the inspection without any tool.

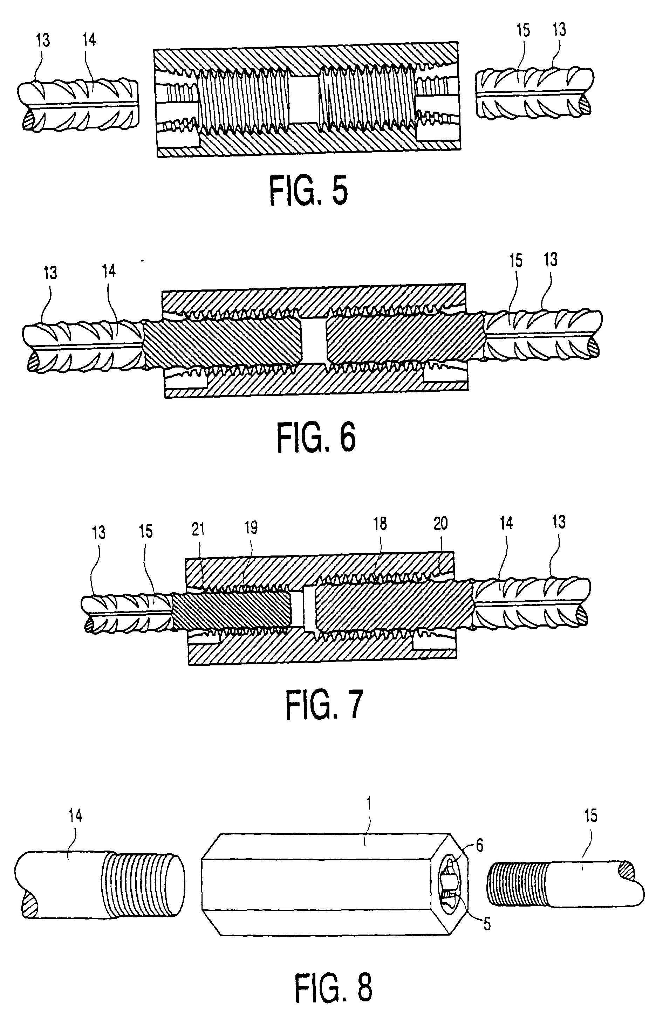

Figure 4 shows on a larger scale that the entrance of hole 2 is slightly tapered to provide a funnel-shaped configuration, thus facilitating the insertion of one end of an object. The funnel angle is indicated at 10. The angle is preferably less then 10°, for example about 5°.

Figures 5 and 6 show the manner in which said connector is provided between the two reinforcing bars 14,15, whose surface is provided with ribs 13. The screw thread is cut entirely or nearly entirely in said ribs 13.

Figure 7 shows a connection, wherein two reinforcing bars 14,15 having different diameters are interconnected by a connector 1 comprising screw thread 18,19 as well as thread cutting portions 20,21 of mutually different diameters.

Figure 8 is a perspective view of a connection which corresponds with the connection shown in Figure 7, wherein the outside surface of connector 1 is hexagonal. The reinforcing bars 14,15 shown in Figure 8 have been screwed out of connector 1, this has only been done for the purpose of illustration.

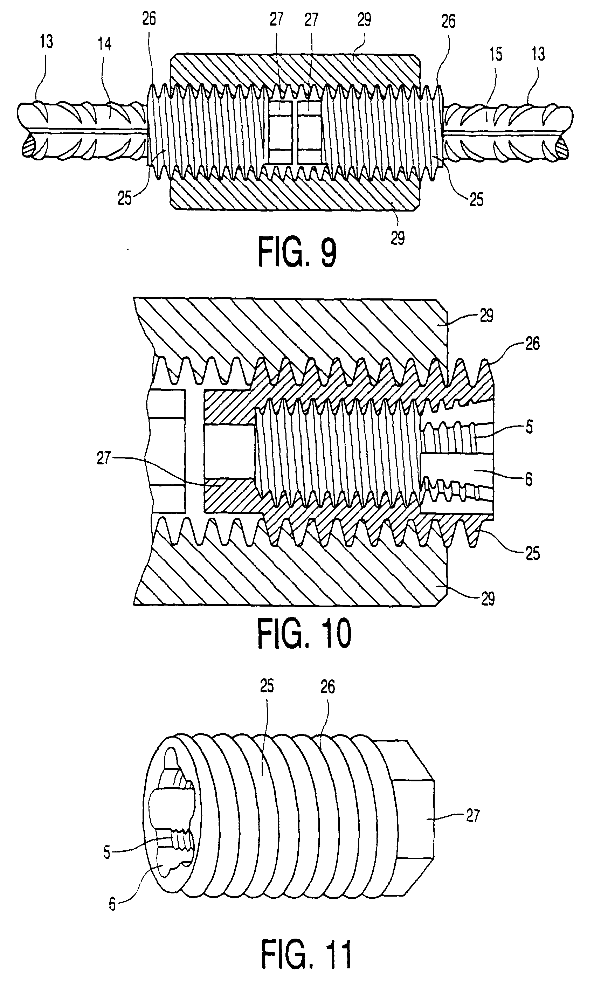

In the embodiment according to Figure 9 each end of the reinforcing bar 14,15 is first provided with a connector 25 of the type shown in Figure 11, having a screw thread cutting portion at one side. Said connector has a substantially cylindrical external surface, which partially consists of external thread 26 and which is partially provided with a hexagonal 27, which can be engaged by a tool with a view to rotating said connector.

After the two connectors 25 have been placed on the ends of the reinforcing bars 14,15, a connecting part 29 is first screwed entirely onto one connector 25, and then screwed back so as to be screwed onto the other connector 25, in order to obtain the situation shown in Figure 9.

Figure 10 is a longitudinal sectional view of a connection which corresponds with the connection shown in Figure 9, including a sectional view of the connector 25. Figure 11 is a perspective view of connector 25.

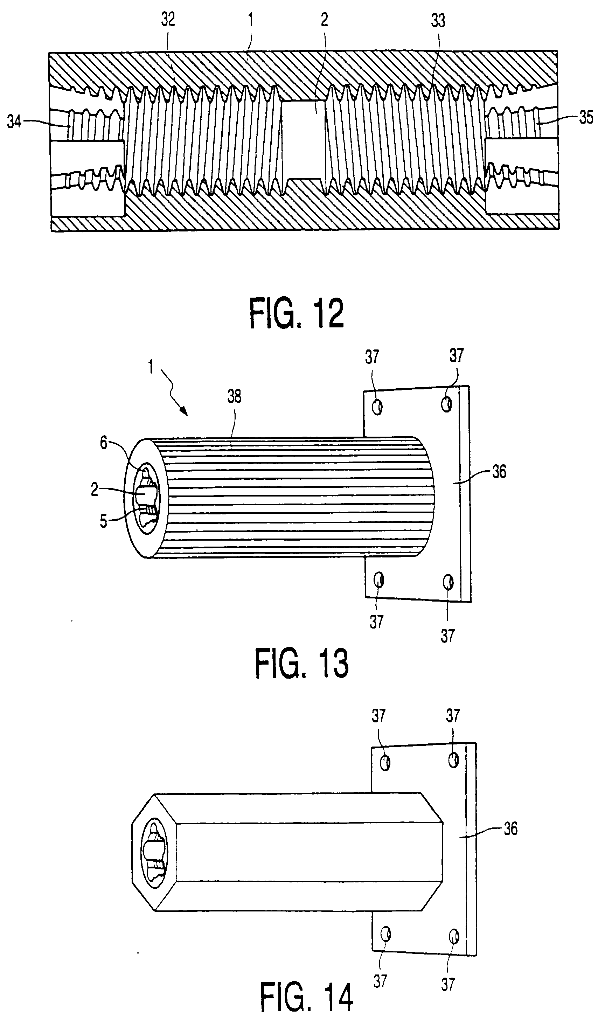

Figure 12 is a longitudinal sectional view of a connector 1 provided with right-handed screw thread 32 on one side and with left-handed screw thread 33 on the other side, which screw threads each adjoin a corresponding thread cutting portions 34,35 near the two entrances of through hole 2. It is possible to interconnect two reinforcing bars 14,15 by means of such connector, whilst the connector is only rotated in one direction.

Figures 13 and 14 show a connector comprising a flange 36 at its end, which flange is provided with four holes 37. The connector according to Figure 13 has a ribbed outside surface 38, so that it can be readily engaged in order to be rotated. The connector according to Figure 14 has a hexagonal outside surface, so that it can be screwed down by means of a conventional spanner. However, the connector may have a substantially cylindrical outside surface without means for being engaged.

The invention may be implemented in many ways in practice, the illustrated embodiments are only intended by way of illustration and are to be considered as examples, therefore.

## Claims

1. A method for connecting a connector (1;25) to the end of a concrete reinforcing bar (14,15), the bar being provided with ribs (13) at its outside surface, whereby screw thread is produced substantially in said ribs (13) on said end of said bar (14,15), and whereby the connector (1;25) is screwed on said end, the connector (1;25) comprising a substantially cylindrical hole (2) provided with internal screw thread (8,9;18,19;32, 33), characterized in that said screw thread is produced on said end of said bar (14,15) by a screw thread producing portion (4;20,21;34,35) of said connector (1;25), which portion co-axially adjoins said internal screw thread (8,9;18,19;32,33) and which portion is positioned between said internal screw thread and the entrance of said hole (2), whereby the screw thread is produced by a material removing cutting operation.

2. A method according to claim 1, characterized in that the removed material is stored in recesses (6) in the connector (1,25).

3. A method according to any of the preceding claims, characterized in that said bar (14,15) is to be connected to an other object, wherein the connector (1,25) is attached to said other object after the connector (1,25) is connected to said end of the bar (14,15).

4. A method according to any of the preceding claims, characterized in that said other object is a second concrete reinforcing bar (15,14), whereby two ends of the two bars (14,15) are interconnected by the connector (1) having two co-axially extending screw thread producing portions (4;20,21;34,35), each portion co-axially adjoining internal screw thread, the connector (1) first being screwed on the one end and the other end is subsequently screwed into the connector (1).

5. A method according to any of the preceding claims, characterized in that two reinforcing bars (14,15) are interconnected, wherein each bar is provided with a connector (25), each connector (25) having external screw thread (26) at its substantially cylindrical outside, after which a connecting part (29) comprising an internally threaded through hole is first screwed onto the screw thread (26) of one connector (25) and then screwed back partially, whereby said connecting part (29) is also screwed onto the screw thread (26) of the other connector (25).

6. A method according to any of the preceding claims, characterized in that the connector (1) is provided with a coaxially orientated flange (36), whereby said flange (36) is attached to the surface of the housing in which concrete is formed after the connector (1) is connected to the reinforcing bar.

7. A connector to be connected to the end of a length of a reinforcing steel bar (14,15) having a ribbed outside surface, the connector comprising a hole (2) provided with internal screw thread (8, 9, 18,19) for fixing the bar, characterized by a screw thread cutting portion (4) which co-axially adjoins said internal screw thread, which portion (4) is positioned between said internal screw thread and the entrance of said hole (2) and which portion (4) is provided with recesses (6) for storing material which is removed from the reinforcing bar (14,15).

8. A connector according to claim 7, characterized in that the screw thread producing portion (4) is provided with at least six recesses (6) which extend substantial in axial direction.

9. A connector according to claim 7 or 8, characterized by two co-axially extending thread cutting portions (4), each adjoining internal screw thread and each located near the entrance of a hole (2), which hole (2) preferably is a through hole (2).

10. A connector according to claim 9, characterized in that one cutting portion (34) cuts a right-handed internal screw thread (32) and the other cutting portion (35) cuts a left-handed internal screw thread (33).

11. A connector according to claim 9 or 10, characterized in that the hole (2) is a through hole (2) comprising two portions with internal screw thread (32,33) at both sides of the middle portion (16) of the hole (2), said middle portion (16) having a smaller diameter then the largest diameter of the screw thread (32,33), so that it forms a stop for the bar (14,15) when being screwed into the connector (1).

12. A connector according to any one of claims 9-11, characterized in that the two screw cutting portions (20,21) cut mutually different internal screw thread (18,19).

13. A connector according to claim 7 or 8, characterized in that at least part of its outside surface is provided with external screw thread (26), which extends co-axially with said internal screw thread, whereby preferably a part of said outside surface is provided with a hexagon (27), which lies entirely within the smallest cylindrical surface formed by the external screw thread (26).

14. A connector according to claim 7 or 8, provided with an radially oriented flange (36) at its axially oriented end facing away from the end where said entrance of the hole (2).

15. A connector according to any of the preceding claims, provided with a radially oriented bore (11), which connects the outside surface with the interior of said hole (2), through which bore it is possible to see or feel whether the bar extends into the hole (2) as far as said bore (11).

16. A connector according to any of the preceding claims, substantially made of steel which is locally hardened at the location of said thread cutting portion (4;20,21;34,35).

## Patentansprüche

1. Verfahren zum Verbinden eines Verbindungselements (1; 25) mit dem Ende eines Beton-Bewehrungsstabes (14, 15), der mit Rippen (13) auf seiner Außenseitenfläche versehen ist, wobei ein Schraubgewinde im wesentlichen in den genannten Rippen (13) an dem genannten Ende des betreffenden Stabes (14, 15) erzeugt wird und wobei das Verbindungselement (1; 25) auf das betreffende Ende geschraubt wird, wobei das Verbindungselement (1; 25) ein im wesentlichen zylindrisches Loch (2) aufweist, welches mit einem Innenschraubgewinde (8, 9; 18, 19; 32, 33) versehen ist,
**dadurch gekennzeichnet,**
dass das genannte Schraubgewinde an dem genannten Ende des Stabes (14, 15) durch ein Schraubgewinde-Erzeugungsteil (4; 20; 21; 34, 35) des genannten Verbindungselements (1; 25) erzeugt wird,
dass das genannte Schraubgewinde-Erzeugungsteil koaxial an das Innenschraubgewinde (8, 9; 18, 19; 32, 33) angrenzt und zwischen dem Innenschraubgewinde und dem Einlaß des genannten Loches (2) positioniert ist, wobei das Schraubgewinde durch einen materialentfernenden Schneidvorgang erzeugt wird.

2. Verfahren nach Anspruch 1,
**dadurch gekennzeichnet,**
dass das entfernte Material in Ausnehmungen (6) in dem Verbindungselement (1, 25) abgelagert wird.

3. Verfahren nach irgendeinem der vorhergehenden Ansprüche,
**dadurch gekennzeichnet,**
dass der genannte Stab (14, 15) mit einem anderen Gegenstand zu verbinden ist, wobei das Verbindungselement (1, 25) an dem genannten anderen Gegenstand angebracht wird, nachdem das Verbindungselement (1, 25) mit dem genannten Ende des Stabes (14, 15) verbunden ist.

4. Verfahren nach irgendeinem der vorhergehenden Ansprüche,
**dadurch gekennzeichnet,**
dass der genannte andere Gegenstand ein zweiter Beton-Bewehrungsstab (15, 14) ist, wobei zwei Enden der beiden Stäbe (14, 15) durch das Verbindungselement (1) miteinander verbunden werden, welches zwei koaxial verlaufende Schraubgewinde-Erzeugungsbereiche (4; 20, 21; 34, 35) aufweist, deren jeder koaxial an das Innenschraubgewinde angrenzt, dass das Verbindungselement (1) zunächst auf das eine Ende geschraubt wird und dass anschließend das andere Ende in das Verbindungselement (1) geschraubt wird.

5. Verfahren nach irgendeinem der vorhergehenden Ansprüche,
**dadurch gekennzeichnet,**
dass zwei Bewehrungsstäbe (14, 15) miteinander verbunden werden, wobei jeder Stab mit einem Verbindungselement (25) versehen ist, wobei jedes Verbindungselement (25) ein Außenschraubgewinde (26) auf seiner im wesentlichen zylindrischen Außenseite aufweist, woraufhin ein Verbindungsteil (29) mit einem Innengewinde-Durchgangsloch zunächst auf das Schraubgewinde (26) des einen Verbindungselements (25) geschraubt und dann zum Teil zurückgeschraubt wird, und dass das genannte Verbindungsteil (29) auch auf das Schraubgewinde (26) des anderen Verbindungselements (25) geschraubt wird.

6. Verfahren nach irgendeinem der vorhergehenden Ansprüche,
**dadurch gekennzeichnet,**
dass das Verbindungselement (1) mit einem koaxial ausgerichteten Flansch (36) versehen ist, wobei der betreffende Flansch (36) an der Fläche des Gehäuses bzw. der Einschließung angebracht ist, in welchem bzw. welcher Beton geformt wird, nachdem das Verbindungselement (1) mit dem Bewehrungsstab verbunden ist.

7. Verbindungselement, welches mit dem Ende eines Stückes eines Bewehrungsstahlstabes (14, 15) zu verbinden ist, der über eine gerippte Außenseitenfläche verfügt, wobei das Verbindungselement ein Loch (2) aufweist, welches zur Fixierung des Stabes mit einem Innenschraubgewinde (8, 9, 18, 19) versehen ist,
**gekennzeichnet durch**
ein Schraubgewinde-Schneidteil (4), welches koaxial an das genannte Innenschraubgewinde angrenzt, wobei das betreffende Schraubgewinde-Schneidteil (4) zwischen dem genannten Innenschraubgewinde und der Eintrittsstelle des genannten Loches (2) positioniert ist und mit Ausnehmungen (6) für Ablagerung von Material versehen ist, welches von dem Bewehrungsstab (14, 15) entfernt wird.

8. Verbindungselement nach Anspruch 7,
**dadurch gekennzeichnet,**
dass das Schraubgewinde-Erzeugungsteil (4) mit zumindest sechs Ausnehmungen (6) versehen ist, die im wesentlichen in axialer Richtung verlaufen.

9. Verbindungselement nach Anspruch 7 oder 8,
**dadurch gekennzeichnet,**
dass zwei koaxial verlaufende Gewinde-Schneidteile (4) vorgesehen sind, die jeweils an ein Innenschraubgewinde angrenzen und die jeweils nahe der Einlaßstelle eines Loches (2) liegen, welches vorzugsweise ein Durchgangsloch (2) ist.

10. Verbindungselement nach Anspruch 9,
dadurch gekennzeichnet, dass ein Schneidteil (34) ein Rechts-Innenschraubgewinde (32) schneidet und dass das andere Schneidteil (35) ein Links-Innenschraubgewinde (33) schneidet.

11. Verbindungselement nach Anspruch 9 oder 10,
**dadurch gekennzeichnet,**
dass das Loch (2) ein Durchgangsloch (2) ist, welches zwei Bereiche mit Innenschraubgewinde (32, 33) auf beiden Seiten des mittleren Bereiches (16) des Loches (2) aufweist, wobei der mittlere Bereich (16) einen geringeren Durchmesser aufweist als der größte Durchmesser des Schraubgewindes (32, 33), derart, dass ein Anschlag für den Stab (14, 15) gebildet ist, wenn dieser in das Verbindungselement (1) geschraubt wird.

12. Verbindungselement nach irgendeinem der Ansprüche 9 bis 11,
**dadurch gekennzeichnet,**
dass die beiden Gewinde-Schneidteile (20, 21) wechselseitig verschiedene Innenschraubgewinde (18, 19) schneiden.

13. Verbindungselement nach Anspruch 7 oder 8,
**dadurch gekennzeichnet,**
dass zumindest ein Teil seiner Außenseitenfläche mit einem Außenschraubgewinde (26) versehen ist, welches koaxial zu dem genannten Innenschraubgewinde verläuft, wobei vorzugsweise ein Teil der betreffenden Außenseitenfläche mit einem Sechseck (27) versehen ist, welches vollständig innerhalb der kleinsten zylindrischen Fläche liegt, die durch das Außenschraubgewinde (26) gebildet ist.

14. Verbindungselement nach Anspruch 7 oder 8, versehen mit einem radial ausgerichteten Flansch (36) an seinem axial ausgerichteten Ende, welches von dem Ende wegweist, an dem die Eintrittsstelle des Loches (2) vorhanden ist.

15. Verbindungselement nach irgendeinem der vorhergehenden Ansprüche, versehen mit einer radial ausgerichteten Bohrung (11), welche die Außenseitenfläche mit dem Innern des genannten Loches (2) verbindet, wobei es durch die betreffende Bohrung möglich ist, zu sehen oder zu fühlen, ob sich der Stab in das Loch (2) soweit erstreckt, wie die Bohrung (11) verläuft.

16. Verbindungselement nach irgendeinem der vorhergehenden Ansprüche, hergestellt im wesentlichen aus Stahl, das lokal an der Stelle des genannten Gewinde-Schneidteiles (4; 20, 21; 34, 35) gehärtet ist.

## Revendications

1. Procédé de raccordement d'un connecteur (1 ;25) à l'extrémité d'une barre d'armature (14,15) pour béton armé, cette barre étant pourvue de nervures (13) au niveau de sa surface extérieure, un filet étant ainsi sensiblement formé dans lesdites nervures (13) sur ladite extrémité de ladite barre (14, 15), et le connecteur (1 ;25) étant vissé sur ladite extrémité, le connecteur (1 ;25) comprenant un trou sensiblement cylindrique (2) pourvu d'un filet interne (8,9 ;18,19 ;32,33), caractérisé en ce que ledit filet est formé sur ladite extrémité de ladite barre (14, 15) par une partie d'aménagement de filet (4 ;20,21 ;34,35) dudit connecteur (1 ;25), laquelle partie est contiguë de manière co-axiale audit filet interne (8,9 ;18,19 ;32,33) et laquelle partie est positionnée entre ledit filet interne et l'entrée dudit trou (2), le filet étant ainsi formé par une opération de taraudage et d'enlèvement de matériau.

2. Procédé selon la revendication 1, caractérisé en ce que le matériau enlevé est stocké dans des évidements (6) ménagés dans le connecteur (1,25).

3. Procédé selon l'une quelconque des revendications précédentes, caractérisé en ce que ladite barre (14,15) doit être raccordée à un autre objet, le connecteur (1,25) étant fixé audit autre objet une fois le connecteur (1,25) raccordé à ladite extrémité de la barre (14,15).

4. Procédé selon l'une quelconque des revendications précédentes, caractérisé en ce que ledit autre objet est une deuxième barre d'armature (15,14) pour béton armé, les deux extrémités des deux barres (14,15) étant reliées entre elles par le connecteur (1) pourvu de deux parties (4 ;20,21 ;34,35) d'aménagement de filets s'étendant de manière coaxiale, chaque partie étant contiguë de manière coaxiale au filet interne, le connecteur (1) étant d'abord vissé sur une extrémité, et l'autre extrémité étant ensuite vissée dans le connecteur (1).

5. Procédé selon l'une quelconque des revendications précédentes, caractérisé en ce que les deux barres d'armature (14, 15) sont reliées entre elles, chaque barre étant pourvue d'un connecteur (25), chaque connecteur (25) présentant un filet externe (26) au niveau de sa partie extérieure sensiblement cylindrique, après quoi une partie de raccordement (29), comprenant un trou traversant pourvu d'un filet interne est d'abord vissée sur le filet (26) d'un connecteur (25) et ensuite partiellement dévissée, ladite partie de raccordement (29) étant également vissée sur le filet (26) de l'autre connecteur (25).

6. Procédé selon l'une quelconque des revendications précédentes, caractérisé en ce que le connecteur (1) est pourvu d'une bride (36) orientée de manière coaxiale, ladite bride (36) étant fixée à la surface du logement dans lequel le béton est formé une fois le connecteur (1) raccordé à la barre d'armature.

7. Connecteur devant être raccordé à l'extrémité d'une longueur d'une barre d'armature en acier (14,15) présentant une surface extérieure nervurée, le connecteur comprenant un trou (2) pourvu d'un filet interne (8,9,18,19) pour fixer la barre, caractérisé par une partie (4) de taraudage qui est contiguë, de manière coaxiale, audit filet interne, laquelle partie (4) est positionnée entre ledit filet interne et l'entrée dudit trou (2) et laquelle partie (4) est pourvue d'évidements (6) pour stocker le matériau qui est retiré de la barre d'armature (14, 15).

8. Connecteur selon la revendication 7, caractérisé en ce que la partie (4) d'aménagement de filet est pourvue d'au moins six évidements (6) qui s'étendent dans un sens sensiblement axial.

9. Connecteur selon la revendication 7 ou la revendication 8, caractérisé par deux parties (4) de taraudage s'étendant dans le sens coaxial, chaque partie étant contiguë au filet interne et chaque partie étant placée à proximité de l'entrée d'un trou (2), lequel trou (2) est, de préférence, un trou traversant (2).

10. Connecteur selon la revendication 9, caractérisé en ce qu'une partie de taraudage (34) taille un filet interne tournant à droite (32) et l'autre partie de taraudage (35) taille un filet interne tournant à gauche (33).

11. Connecteur selon la revendication 9 ou la revendication 10, caractérisé en ce que le trou (2) est un trou traversant (2) comprenant deux parties avec un filet interne (32, 33) de part et d'autre de la partie médiane (16) du trou (2), ladite partie médiane (16) présentant un diamètre inférieur au diamètre le plus grand du filet (32, 33), de telle sorte qu'elle constitue une butée pour la barre (14,15) lors du vissage de cette dernière dans le connecteur (1).

12. Connecteur selon l'une quelconque des revendications 9-11, caractérisé en ce que les deux parties (20,21) de taraudage taillent chacune des filets internes différents (18, 19).

13. Connecteur selon la revendication 7 ou la revendication 8, caractérisé en ce qu'au moins une partie de sa surface extérieure est pourvue d'un filet externe (26) qui s'étend de manière coaxiale par rapport audit filet interne, une partie de ladite surface extérieure étant, de préférence, pourvue d'un hexagone (27) qui se situe entièrement dans la surface cylindrique la plus petite formée par le filet externe (26).

14. Connecteur selon la revendication 7 ou la revendication 8, pourvu d'une bride orientée dans le sens radial (36) au niveau de son extrémité dirigée, de manière axiale, vers le côté opposé à l'extrémité dans laquelle se situe l'entrée dudit trou (2).

15. Connecteur selon l'une quelconque des revendications précédentes, pourvu d'un alésage orienté dans le sens radial (11) qui raccorde la surface extérieure à l'intérieur dudit trou (2), alésage dans lequel il est possible de voir ou de sentir si la barre s'étend dans le trou (2) jusqu'au niveau dudit alésage (11).

16. Connecteur selon l'une quelconque des revendications précédentes, sensiblement composé d'acier qui est de l'acier trempé localement au niveau de l'emplacement de ladite partie de taraudage (4 ;20,21 ;34,35).
